# EUROPEAN PATENT SPECIFICATION

(11) **EP 4 350 662 B1**
(45) Date of publication and mention of the grant of the patent: **22.10.2025**
(21) Application number: 21942149.2
(22) Date of filing: 28.05.2021
(51) Int. Cl.: G08G 1/16, B60W 30/12, B60W 30/16, B60W 30/18, B60W 60/00, B60W 50/14

(54) **DRIVING ASSISTANCE METHOD AND DRIVING ASSISTANCE DEVICE**
FAHRASSISTENZVERFAHREN UND FAHRASSISTENZVORRICHTUNG
PROCÉDÉ D'AIDE À LA CONDUITE ET DISPOSITIF D'AIDE À LA CONDUITE

(43) Date of publication of application: 10.04.2024
(73) Proprietor: NISSAN MOTOR CO., LTD., Kanagawa 221-0023 (JP)
(72) Inventor: NAKAMURA Shohei, Atsugi-shi, Kanagawa 243-0123 (JP); ITO Atsushi, Atsugi-shi, Kanagawa 243-0123 (JP)
(74) Representative: Grünecker Patent- und Rechtsanwälte PartG mbB
(86) International application number: PCT/JP2021/020483
(87) International publication number: WO 2022/249469

(56) References cited:
- JP-A- 2019 073 280
- JP-A- 2019 073 280
- JP-A- 2020 183 226
- JP-B2- 5 382 218
- US-A1- 2020 198 648

## Description

The present invention relates to a driving assistance method and a driving assistance device.

In PTL 1, a display device for vehicle that displays a notification shape on a display unit when an autonomous driving function stands by is described.

JP 2019 073280 A describes a driving support method which notifies the driver that an automatic driving mode has started after the driver has instructed the start of the automatic driving mode.

PTL1: JP 2018-149907 A

However, when it is notified only by a display device that autonomous travel control of a vehicle can be started, a passenger sometimes does not notice the notification.

An object of the present invention is to facilitate a passenger noticing that autonomous travel control of a vehicle can be started.

This is achieved by claim 1 for a driving assistance method and by claim 6 for a driving assistance device.

According to the present invention, it is possible tc facilitate a passenger noticing that autonomous travel control of a vehicle can be started.

The object and advantages of the invention will be realized and attained by means of the elements and combinations particularly pointed out in the claims. It is to be understood that both the foregoing general description and the following detailed description are exemplary and explanatory and are not restrictive of the invention.

### Brief Description of Drawings

FIG. 1 is a diagram illustrative of an example of a schematic configuration of a vehicle on which a driving assistance device of an embodiment is mounted.
FIG. 2 is a diagram illustrative of a portion of an input device in FIG. 1;
FIG. 3 is a diagram illustrative of an example of a display by a display device in FIG. 1; and
FIG. 4 is a flowchart of an example of a driving assistance method of the embodiment.

### Description of Embodiments

### (Configuration)

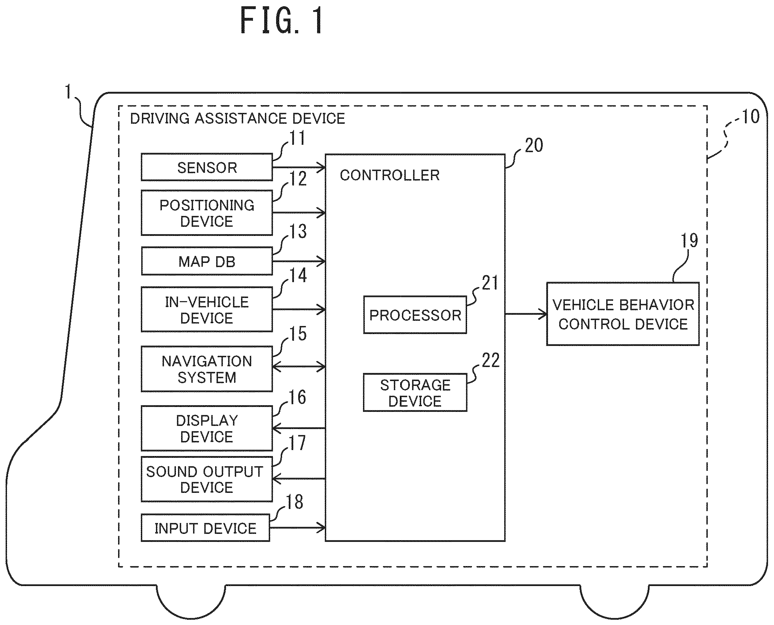

FIG. 1 is a diagram illustrative of an example of a schematic configuration of a vehicle on which a driving assistance device of an embodiment is mounted. A driving assistance device 10 mounted on a vehicle 1 includes a sensor 11, a positioning device 12, a map database (map DB) 13, an in-vehicle device 14, a navigation system 15, a display device 16, a sound output device 17, an input device 18, a vehicle behavior control device 19, and a controller 20. The above-described devices are connected to one another via, for example, a controller area network (CAN) or another in-vehicle LAN in order to perform transmission and reception of information with one another.

The sensor 11 detects a travel state of the vehicle 1. For example, the sensor 11 includes cameras, such as a front view camera for capturing a front view of the vehicle 1, a rear view camera for capturing a rear view of the vehicle 1, and side view cameras for capturing right and left side views of the vehicle 1. In addition, the sensor 11 includes radars, such as a front radar for detecting an obstacle in front of the vehicle 1, a rear radar for detecting an obstacle in the rear of the vehicle 1, and side radars for detecting an obstacle existing on the right and left lateral sides of the vehicle 1. Further, the sensor 11 includes a vehicle speed sensor for detecting vehicle speed of the vehicle 1, a touch sensor (capacitance sensor) for detecting holding of a steering wheel by a passenger (for example, a driver), an in-vehicle camera for imaging the passenger, and the like.

The positioning device 12 includes a GPS unit, a gyro sensor, a vehicle speed sensor, and the like. The positioning device 12 detects radio waves transmitted from a plurality of satellites by the GPS unit and periodically acquires position information of the vehicle 1. In addition, the positioning device 12 detects a current position of the vehicle 1, based on acquired position information of the vehicle 1, angle change information acquired from the gyro sensor, and vehicle speed acquired from the vehicle speed sensor.

The map database 13 is a memory that stores three-dimensional high-definition map information including position information of various types of facilities and specific points and is configured to be accessible from the controller 20. The three-dimensional high-definition map information is three-dimensional map information based on road shapes detected when a vehicle for data acquisition traveled on actual roads. The three-dimensional high-definition map information is map information in which detailed and highly precise position information of a curved road and the amount of curvature (for example, curvature or radius of curvature) of the road, a junction of roads, a branch point, a tollgate, a point of reduction in the number of lanes, and the like is associated with map information as three-dimensional information.

The in-vehicle device 14 is various types of devices mounted on the vehicle 1 and operates in accordance with an operation by the passenger. Examples of such an in-vehicle device include a steering wheel, an accelerator pedal, a brake pedal, turn signals, windshield wipers, lights, a horn, other specific switches, and the like.

The navigation system 15 acquires current position information of the vehicle 1 from the positioning device 12 and displays map information for navigation on which the position of the vehicle 1is superimposed on a display or the like. In addition, the navigation system 15 includes a navigation function to, when a destination is set, set a route to the destination and guide the passenger along the set route. The navigation function displays a route on a map on the display and informs the passenger of the route by voice or the like. A route set by the navigation system 15 is also used in a route travel assistance function that the controller 20 includes. The route travel assistance function is a function to cause the vehicle 1 to autonomously travel to a destination, based on a set route.

The passenger can set whether the route travel assistance function is enabled or disabled by operating the navigation system 15.

The display device 16 includes, for example, a display that the navigation system 15 includes, a display incorporated in a rearview mirror, a display incorporated in a meter section, a head-up display projected on a windshield, and the like. The display device 16 notifies the passenger of various types of presented information in accordance with control by the controller 20.

The sound output device 17 is a device to output acoustic information, such as a speaker that the navigation system 15 includes, a speaker of an audio device, and a buzzer. The sound output device 17 notifies the passenger of various types of presented information in accordance with control by the controller 20.

The input device 18 is a device, such as a button switch that enables the passenger to input an operation by manual operation, a touch panel arranged on a display screen, and a microphone that enables the passenger to input an operation by voice. The passenger, by operating the input device 18, is able to input setting information in response to presented information presented by the display device 16 and the sound output device 17.

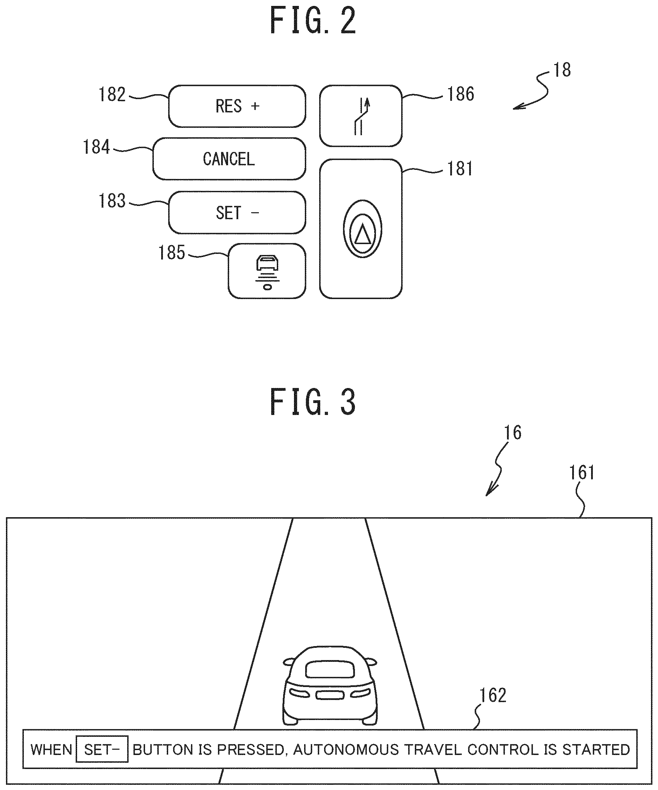

FIG. 2 is a diagram illustrative of a portion of the input device 18 of the present embodiment. The input device 18 may be a button switch group that is arranged on, for example, a spoke of the steering wheel. The input device 18 is used when turning on and off and the like of an autonomous travel control function that the controller 20 includes are set. The input device 18 includes a main switch 181, a resume/accelerate switch 182, a set/coast switch 183, a cancel switch 184, an inter-vehicle distance adjustment switch 185, and a lane change assistance switch 186.

The main switch 181 is a switch to turn on and off the autonomous travel control function of the controller 20. The resume/accelerate switch 182 is a switch to, after the autonomous travel control function is turned off, set resumption of the autonomous travel control function at a set speed before the turning-off of the autonomous travel control function or to increase the set speed. The set/coast switch 183 is a switch to start the autonomous travel control function. In order to start the autonomous travel control function, after the autonomous travel control function is turned on by the main switch 181, the set/coast switch 183 is pressed. The set/coast switch 183 is also a switch to decrease the set speed. The cancel switch 184 is a switch to cancel the autonomous travel control function. The inter-vehicle distance adjustment switch 185 is a switch to set an inter-vehicle distance to a preceding vehicle. The lane change assistance switch 186 is a switch to, when the controller 20 confirms start of a lane change to the passenger, instruct (accept) the start of the lane change.

Note that, in addition to the button switch group illustrated in FIG. 2, a turn signal lever for the turn signals and a switch of another type of in-vehicle device 14 can be used as the input device 18. For example, when the passenger operates the turn signal lever in the case where whether or not a lane change is performed in an automated manner is proposed by the controller 20, a lane change in a direction in which the turn signal lever is operated is performed instead of the proposed lane change.

The vehicle behavior control device 19 controls vehicle behavior of the vehicle 1. For example, when the vehicle 1 performs constant speed travel at a set speed by the autonomous travel control function, the vehicle behavior control device 19 controls operation of a drive mechanism and brake operation to achieve acceleration/deceleration and travel speed that enable the vehicle 1 to travel at the set speed. In addition, when the vehicle 1 travels following a preceding vehicle by the autonomous travel control function, the vehicle behavior control device 19 also likewise controls the operation of the drive mechanism and the brake. Note that the operation control of the drive mechanism includes operation of an internal-combustion engine in the case of an engine-driven vehicle and operation of a motor for traveling in the case of an electric vehicle. In addition, the operation control of the drive mechanism includes torque distribution between an internal-combustion engine and a motor for traveling in the case of a hybrid vehicle.

In addition, when the vehicle behavior control device 19 performs lane-keeping control, a lane change assistance function, a passing assistance function, or a route travel assistance function, which will be described later, by the autonomous travel control function, the vehicle behavior control device 19 performs, in addition to the operation control of the drive mechanism and the brake, steering control of the vehicle 1 by controlling operation of a steering actuator.

The controller 20 is one or a plurality of electronic control units (ECUs) for controlling travel of the vehicle 1 and includes a processor 21 and peripheral components, such as a storage device 22. The processor 21 may be, for example, a central processing unit (CPU) or a micro-processing unit (MPU). The storage device 22 may include a semiconductor storage device, a magnetic storage device, an optical storage device, and the like. The storage device 22 may include registers, a cache memory, and a memory, such as a read only memory (ROM) and a random access memory (RAM), that are used as main storage devices.

Functions of the controller 20, which will be described below, are achieved by, for example, the processor 21 executing computer programs stored in the storage device 22.

Note that the controller 20 may be formed using dedicated hardware for performing various types of information processing that will be described below. For example, the controller 20 may include a functional logic circuit that is implemented in a general-purpose semiconductor integrated circuit. For example, the controller 20 may include a programmable logic device (PLD), such as a field-programmable gate array (FPGA), and the like.

The controller 20 achieves a travel information acquisition function to acquire information relating to a travel state of the vehicle 1 and an autonomous travel control function to autonomously control travel speed and/or steering of the vehicle 1. The travel information acquisition function of the controller 20 is a function to acquire travel information relating to a travel state of the vehicle 1. For example, the controller 20 may acquire, as the travel information, image information of the outside of the vehicle captured by the front view camera, the rear view camera, and the side view cameras in the sensor 11. In addition, the controller 20 acquires, as the travel information, detection results by the front radar, the rear radar, and the side radars. Further, the controller 20 also acquires, as the travel information, vehicle speed information of the vehicle 1 detected by the vehicle speed sensor in the sensor 11 and image information of the face of the passenger captured by the in-vehicle camera.

Further, the controller 20 acquires, as the travel information, the current position information of the vehicle 1 from the positioning device 12. In addition, the controller 20 acquires, as the travel information, a set destination and a route to the destination from the navigation system 15. Further, the controller 20 acquires, as the travel information, position information of a curved road and the amount of curvature (for example, curvature or radius of curvature) of the road, a junction of roads, a branch point, a tollgate, a point of reduction in the number of lanes, and the like from the map database 13. Moreover, the controller 20 acquires, as the travel information, information about operation of the in-vehicle device 14 by the passenger from the in-vehicle device 14.

The autonomous travel control function of the controller 20 is a function to autonomously control travel of the vehicle 1 without depending on operation by the passenger. The autonomous travel control function of the controller 20 include an autonomous speed control function to autonomously control travel speed of the vehicle 1 and an autonomous steering control function to autonomously control steering of the vehicle 1. The autonomous speed control function and the autonomous steering control function of the present embodiment will be described below.

### <Autonomous Speed Control Function>

The autonomous speed control function is a function to, when a preceding vehicle is detected, control the vehicle 1 to travel following the preceding vehicle while performing inter-vehicle distance control in such a way as to keep an inter-vehicle distance matching vehicle speed with a vehicle speed set by the passenger as an upper limit. In contrast, when no preceding vehicle is detected, the autonomous speed control function controls the vehicle 1 to perform constant speed travel at a vehicle speed set by the passenger. The former and the latter are also referred to as inter-vehicle distance control and constant speed control, respectively. Note that the autonomous speed control function may include a function to detect a speed limit of a road on which the vehicle 1 is traveling from a road sign by the sensor 11 or acquire a speed limit from the map information in the map database 13 and automatically set the speed limit as a set vehicle speed.

The constant speed control is performed when it is detected by the front radar or the like in the sensor 11 that no preceding vehicle exists ahead in an own lane of the vehicle 1. In the constant speed control, the vehicle behavior control device 19 controls operation of the drive mechanism, such as the engine and the brake, in such a manner as to maintain a set traveling speed while feeding back vehicle speed data detected by the vehicle speed sensor.

The inter-vehicle distance control is performed when it is detected by the front radar or the like in the sensor 11 that a preceding vehicle exists ahead in the own lane of the vehicle 1. In the inter-vehicle distance control, the vehicle behavior control device 19 controls operation of the drive mechanism, such as the engine and the brake, in such a manner as to maintain a set inter-vehicle distance with a set travel speed as an upper limit while feeding back inter-vehicle distance data detected by the front radar.

### <Autonomous Steering Control Function>

The autonomous steering control function is a function to perform the steering control of the vehicle 1 by controlling operation of the steering actuator and can be used when a predetermined autonomous travel control start condition is established.

The autonomous steering control function includes, for example, the lane-keeping function, the lane change assistance function, the passing assistance function, and the route travel assistance function.

The lane-keeping function is a function to assist steering of the passenger by controlling the steering actuator in such a way that, for example, the vehicle 1 travels along substantially the center of a lane.

The autonomous travel control start condition may be, for example, a condition requiring that all of the following conditions are established.
- The vehicle 1 is traveling on a road for which a high-definition map is provided.
- A GPS signal is available.

When the set/coast switch 183 is pressed after the autonomous travel control function is turned on by the main switch 181, the controller 20 determines whether or not the autonomous travel control start condition is established. When the controller 20 determines that the autonomous travel control start condition is established, the controller 20 performs the lane-keeping function in the autonomous steering control function.

Alternatively, when the autonomous travel control start condition is established after the autonomous travel control function is turned on by the main switch 181, the controller 20 waits for the set/coast switch 183 to be pressed. When the set/coast switch 183 is pressed, the controller 20 starts the autonomous travel control and performs the lane-keeping function in the autonomous steering control function. An operation of pressing the set/coast switch 183 is an example of a "start operation of the autonomous travel control" described in the claims.

### <Lane Change Assistance Function>

The lane change assistance function starts lane change operation that is a series of processing for automated lane change when the passenger operates the turn signal lever to turn on a turn signal and a predetermined lane change start condition is satisfied. The lane change assistance function determines whether or not the predetermined lane change start condition is established, based on various types of travel information acquired by the travel information acquisition function. The lane change start condition may be, for example, a condition requiring that all of the following conditions are established.
- The lane-keeping function is being performed.
- It is determined that the passenger puts his/her hands on the steering wheel.
- The vehicle 1 is traveling at a speed of 60 km/h or more.
- A lane exists in a direction in which a lane change is to be performed.
- A space allowing a lane change exists in a destination lane of the lane change.
- The type of a lane marker indicates that a lane change is allowed.
- Radius of curvature of a road is 250 m or more.

The lane change assistance function starts the lane change operation when the lane change start condition is satisfied. The lane change operation causes the vehicle 1 to laterally move to an adjacent lane and, when the movement to the adjacent lane is finished, turns off the turn signal and starts performance of the lane-keeping function in the adjacent lane.

### <Passing Assistance Function>

When a preceding vehicle that is slower than the vehicle 1 exists ahead in the own lane of the vehicle 1 and a predetermined passing proposition condition is satisfied, the passing assistance function presents passing information to the passenger by the display device 16. In this configuration, the passing information is information for proposing passing the preceding vehicle to the passenger. The passing assistance function turns on a turn signal and starts the above-described lane change operation when the passenger accepts the passing by operating the lane change assistance switch 186 in the input device 18 in response to the presentation of the passing information and a preset passing start condition is satisfied. The passing assistance function determines whether or not the passing proposition condition and the passing start condition are established, based on various types of travel information acquired by the travel information acquisition function.

The passing proposition condition may be, for example, a condition requiring that all of the following conditions are established.
- The lane-keeping function is being performed.
- The vehicle 1 is traveling at a speed of 60 km/h or more.
- A lane exists in a direction in which a lane change is to be performed.
- A space allowing a lane change exists in a destination lane of the lane change 5 seconds later.
- The type of a lane marker indicates that a lane change is allowed.
- Radius of curvature of a road is 250 m or more.
- Speed of the vehicle 1 is 5 km/h or more slower than a set speed.
- Speed of a preceding vehicle is 10 km/h or more slower than the set speed.
- Inter-vehicle distance between the vehicle 1 and the preceding vehicle falls below a threshold value that is set in advance, based on a difference in speed between the vehicle 1 and the preceding vehicle
- Speed of a preceding vehicle existing in a destination lane of a lane change satisfies a predetermined condition.

In addition, the passing start condition may be, for example, a condition requiring that all of the following conditions are established.
- The lane-keeping function is being performed.
- It is determined that the passenger puts his/her hands on the steering wheel.
- The vehicle 1 is traveling at a speed of 60 km/h or more.
- A lane exists in a direction in which a lane change is to be performed.
- A space allowing a lane change exists in a destination lane of the lane change.
- The type of a lane marker indicates that a lane change is allowed.
- Radius of curvature of a road is 250 m or more.
- Speed of the vehicle 1 is 5 km/h or more slower than a set speed.
- Speed of a preceding vehicle is 10 km/h or more slower than the set speed.
- Speed of a preceding vehicle existing in a destination lane of a lane change satisfies a predetermined condition.
- The elapsed time from an operation of the lane change assistance switch 186 is within 10 seconds.

### <Route Travel Assistance Function>

When a travel direction change point, such as a branch point, a junction, an exit, and a tollgate, exists in a set route, distance to the travel direction change point is within a predetermined distance, and a predetermined route travel proposition condition is satisfied, the route travel assistance function presents route travel information by the display device 16 and proposes a lane change toward the travel direction change point. In addition, the route travel assistance function starts lane change operation when the proposition of lane change is accepted by an operation of the lane change assistance switch 186 and a predetermined route travel start condition is satisfied.

The route travel assistance function is an example of "travel assistance control to perform in an automated manner a lane change for causing the vehicle to travel along a route from a current position to a destination".

The route travel assistance function determines whether or not the route travel proposition condition and the route travel start condition are established, based on various types of travel information acquired by the travel information acquisition function. Note that, as described above, the passenger can set whether the route travel assistance function is enabled or disabled by operating the navigation system 15.

The route travel proposition condition may be, for example, a condition requiring that all of the following conditions are established.
- The lane-keeping function is being performed.
- A destination is set in the navigation system 15.
- The vehicle 1 is traveling at a speed of 60 km/h or more.
- A lane exists in a direction in which a lane change is to be performed.
- The type of a lane marker indicates that a lane change is allowed.
- Radius of curvature of a road is 250 m or more.

In addition, the route travel start condition may be, for example, a condition requiring that all of the following conditions are established.
- The lane-keeping function is being performed.
- It is determined that the passenger puts his/her hands on the steering wheel.
- The vehicle 1 is traveling at a speed of 60 km/h or more.
- A lane exists in a direction in which a lane change is to be performed.
- A space allowing a lane change exists in a destination lane of the lane change.
- The type of a lane marker indicates that a lane change is allowed.
- The vehicle 1 is traveling in a section within a first predetermined distance to a branch point.
- Radius of curvature of a road is 250 m or more.

As described above, to use the autonomous travel control function, it is required to, after turning on the autonomous travel control function by operating the main switch 181, start the autonomous travel control function by pressing the set/coast switch 183. That is, even when the autonomous travel control start condition has already been established, the autonomous travel control function is started only after the set/coast switch 183 is pressed.

Therefore, when, although the autonomous travel control function has been turned on by an operation of the main switch 181 and the autonomous travel control start condition has been established, the autonomous travel control function has not started (that is, when the set/coast switch 183 has not been pressed), the controller 20 displays information prompting a start operation of the autonomous travel control on the display device 16.

FIG. 3 is a diagram illustrative of an example of a display by the display device 16. The display device 16 may display a display screen 161 in a meter section in front of a driver seat. For example, the display screen 161 may be displayed between a speedometer and a tachometer in the meter section.

When, although the autonomous travel control function has been turned on by an operation of the main switch 181 and the autonomous travel control start condition has been established, the autonomous travel control function has not started, the controller 20 displays information 162 prompting the start operation of the autonomous travel control in the display screen 161. For example, the information 162 may be a display informing that when the set/coast switch 183 is pressed, the autonomous travel control can be started.

Even when the information 162 prompting the start operation of the autonomous travel control is displayed in the display screen 161 as described above, the passenger sometimes does not notice the information 162 soon. Thus, by outputting voice information prompting the start operation of the autonomous travel control from the sound output device 17, it is possible to inform the passenger that the autonomous travel control start condition has been established and the autonomous travel control function can be used.

However, there is a risk that when voice information prompting the start operation of the autonomous travel control is output in the case where, for example, the passenger has no intention to use the autonomous travel control function, the passenger feels annoyed.

Therefore, the controller 20 determines whether or not the passenger has input and set a destination in the navigation system 15. Then, the controller 20 notifies the passenger of information prompting the start operation of the autonomous travel control in a more intense notification form when determining that the autonomous travel control start condition is established and determining that a destination is set than when determining that the autonomous travel control start condition is established and determining that no destination is set.

For example, when the controller 20 determines that the autonomous travel control function is turned on, determines that the autonomous travel control start condition is established, and determines that a destination is set, the controller 20 outputs voice information prompting the start operation of the autonomous travel control from the sound output device 17.

The voice information prompting the start operation of the autonomous travel control may be voice information informing that the route travel assistance function can be used or voice information simply informing that when the set/coast switch 183 is pressed, the autonomous travel control can be started.

On the other hand, when, although the controller 20 determines that the autonomous travel control function is turned on and the autonomous travel control start condition is established, no destination is set, the controller 20 does not output voice information prompting the start operation of the autonomous travel control (for example, prohibits output of the voice information). This is because there is a higher possibility that the passenger feels annoyed by such voice information when the passenger has not set a destination than when the passenger has set a destination.

In addition, the same applies to a case where the route travel assistance function is disabled in the navigation system 15 as described above. Therefore, when, even when the controller 20 determines that the autonomous travel control function is turned on and the autonomous travel control start condition is established and a destination is set, the route travel assistance function is set to be disabled, the controller 20 does not output voice information prompting the start operation of the autonomous travel control.

Because of this configuration, it becomes possible to cause the passenger to actively use the autonomous travel control, and it is possible to improve fuel consumption compared with a case of manual driving by the passenger.

On the other hand, when the passenger has no intention to use the autonomous travel control, not outputting voice information prompting the start operation of the autonomous travel control enables annoyance caused by unnecessary voice information to be eliminated. In addition, not outputting unnecessary voice information enables a processing load on the controller 20 to be reduced and also enables generation of other information and alarm sound to be prevented from being inhibited and output timing of other information and alarm sound to be prevented from being delayed.

### (Operation)

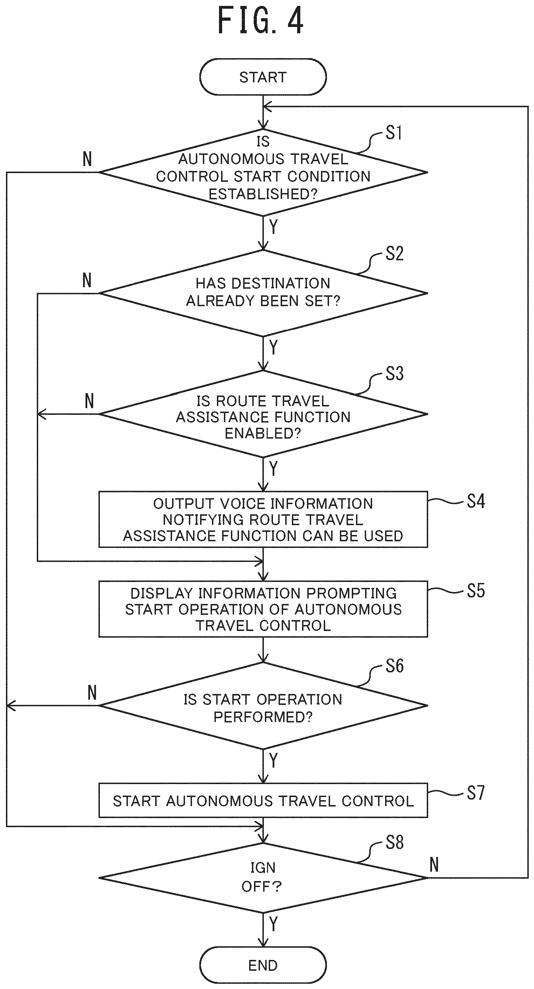

FIG. 4 is a flowchart of an example of a driving assistance method of the embodiment.

In step S1, the controller 20 determines whether or not the autonomous travel control start condition is established. When the autonomous travel control start condition is established (step S1: Y), the process proceeds to step S2. When the autonomous travel control start condition is not established (step S1: N), the process proceeds to step S8.

In step S2, the controller 20 determines whether or not a destination is set by the passenger. When a destination is set (step S2: Y), the process proceeds to step S3. When no destination is set (step S2: N), the process proceeds to step S5.

In step S3, the controller 20 determines whether or not the route travel assistance function is set to be enabled. When the route travel assistance function is set to be enabled (step S3: Y), the process proceeds to step S4. When the route travel assistance function is set to be disabled (step S3: N), the controller 20 does not output voice information prompting a start operation of the autonomous travel control, and the process proceeds to step S5.

In step S4, the controller 20 outputs voice information prompting the start operation of the autonomous travel control from the sound output device 17. Subsequently, the process proceeds to step S5. Note that the controller 20 does not have to repeatedly output voice information prompting the start operation of the autonomous travel control. For example, the controller 20 may output the voice information only once every time a state in which the autonomous travel control start condition is not established changes to a state in which the autonomous travel control start condition is established.

In step S5, the controller 20 outputs the information 162 prompting the start operation of the autonomous travel control on the display device 16.

In step S6, the controller 20 determines whether or not the passenger has performed the start operation of the autonomous travel control. When the start operation is performed (step S6: Y), the process proceeds to step S7. When the start operation is not performed (step S6: N), the process proceeds to step S8.

In step S7, the controller 20 starts the autonomous travel control. Subsequently, the process proceeds to step S8.

In step S8, the controller 20 determines whether or not an ignition key of the vehicle 1 is turned off. When the ignition key has not been turned off (step S8: N), the process returns to step S1. When the ignition key is turned off (step S8: Y), the process terminates.

### (Advantageous Effects of Embodiment)

(1) The controller 20 performs processing including: determining whether or not the autonomous travel control start condition for autonomous travel control, the autonomous travel control controlling steering, acceleration, and deceleration of the vehicle 1 in an automated manner, to be performable is established; determining whether or not a destination to which the vehicle 1 is caused to travel is set; notifying information prompting a start operation of the autonomous travel control in a more intense notification form when determining that the autonomous travel control start condition is established and determining that a destination is set than when determining that the autonomous travel control start condition is established and determining that no destination is set; determining whether or not the start operation is received; and starting the autonomous travel control when determining that the start operation is received.

For example, when the controller 20 determines that the autonomous travel control start condition is established and determines that a destination is set, the controller 20 outputs voice information prompting the start operation of the autonomous travel control, and when the controller 20 determines that the autonomous travel control start condition is established and determines that no destination is set, the controller 20 does not output voice information prompting the start operation.

Because of this configuration, it becomes possible to cause the passenger to actively use the autonomous travel control, and it is possible to improve fuel consumption compared with a case of manual driving by the passenger.

On the other hand, when the passenger has no intention to use the autonomous travel control, not outputting voice information prompting the start operation of the autonomous travel control enables annoyance caused by unnecessary voice information to be eliminated. In addition, not outputting unnecessary voice information enables a processing load on the controller 20 to be reduced and also enables generation of other information and alarm sound to be prevented from being inhibited and output timing of other information and alarm sound to be prevented from being delayed.

(2) When the controller 20 determines that the autonomous travel control start condition is established and determines that no destination is set, the controller 20 may perform processing of displaying information prompting the start operation on the display device.

Because of this configuration, even when voice information prompting the start operation is not output, it is possible to cause the passenger to notice that the autonomous travel control has become usable.

(3) When the controller 20 determines that the autonomous travel control start condition is established and determines that a destination is set, the controller 20 may perform processing of displaying information prompting the start operation of the autonomous travel control on the display device in conjunction with outputting voice information prompting the start operation. Outputting voice information in addition to displaying information prompting the start operation facilitates the passenger noticing that the autonomous travel control has become usable.

(4) The autonomous travel control may include the route travel assistance function to perform in an automated manner a lane change for causing the vehicle 1 to travel along a route from the current position to a destination. The voice information prompting the start operation may be information informing that the route travel assistance function can be used. This configuration facilitates the passenger using the route travel assistance function.

(5) The navigation system 15 or the controller 20 may store a setting by the passenger for selecting whether the route travel assistance function is enabled or disabled. When, even when the controller 20 determines that the autonomous travel control start condition is established and determines that a destination is set, the route travel assistance function is set to be disabled, the controller 20 does not have to output voice information.

Because of this configuration, when the passenger has no intention to use the autonomous travel control, annoyance caused by unnecessary voice information can be eliminated.

Note that although, in the embodiment, an example in which an intense notification form is achieved by outputting voice information in addition to information display was described, the present invention is not limited to the example. For example, it is possible to achieve an intense notification form only by changing sound (amplitude, strength, frequency, or the like) . In addition, it is possible to achieve an intense notification form only by changing a display form (color, brightness, size, or the like). Further, the sound and the display form may be changed in combination with each other.

All examples and conditional language provided herein are intended for the pedagogical purposes of aiding the reader in understanding the invention and the concepts contributed by the inventor to further the art, and are not to be construed as limitations to such specifically recited examples and conditions, nor does the organization of such examples in the specification relate to a showing of the superiority and inferiority of the invention. Although one or more embodiments of the present invention have been described in detail, it should be understood that the various changes, substitutions, and alterations could be made hereto without departing from the scope of the invention as defined in the appended claims.

### Reference Signs List

- 1: Vehicle
- 10: Driving assistance device
- 11: Sensor
- 12: Positioning device
- 13: Map database
- 14: In-vehicle device
- 15: Navigation system
- 16: Display device
- 17: Sound output device
- 18: Input device
- 19: Vehicle behavior control device
- 20: Controller
- 21: Processor
- 22: Storage device

## Claims

1. A driving assistance method comprising:
determining (S1) whether or not an autonomous travel control start condition for autonomous travel control, the autonomous travel control controlling steering, acceleration, and deceleration of a vehicle (1) in an automated manner, to be performable is established;
determining (S2) whether or not a destination to which the vehicle (1) is caused to travel is set;
notifying (S5) information prompting a start operation of the autonomous travel control in a first notification form, the start operation is a manual operation by a passenger for starting the autonomous travel control, when the start operation has not been performed yet and it is determined that the autonomous travel control start condition is established and it is determined that the destination is not set;
notifying (S4) information prompting a start operation of the autonomous travel control in a second notification form more intense than the first notification form when the start operation has not been performed yet and it is determined that the autonomous travel control start condition is established and it is determined that the destination is set;
determining (S6) whether or not the start operation is received; and
starting (S7) the autonomous travel control when determining that the start operation is received.

2. The driving assistance method according to claim 1, wherein
when determining that the autonomous travel control start condition is established and determining that the destination is set, the driving assistance method outputs (S4) voice information prompting a start operation of the autonomous travel control, and
when determining that the autonomous travel control start condition is established and determining that the destination is not set, the driving assistance method does not output voice information prompting the start operation.

3. The driving assistance method according to claim 1 or 2, wherein when determining that the autonomous travel control start condition is established and determining that the destination is not set, the driving assistance method displays (S5) information prompting the start operation on a display device.

4. The driving assistance method according to any one of claims 1 to 3, wherein when determining that the autonomous travel control start condition is established and determining that the destination is set, the driving assistance method displays (S5) information prompting a start operation of the autonomous travel control on a display device, as well as outputting (S4) voice information prompting the start operation.

5. The driving assistance method according to claim 4, wherein
the autonomous travel control includes travel assistance control to perform in an automated manner a lane change for causing the vehicle (1) to travel along a route from a current position to a destination, and
the voice information is information informing that the travel assistance control can be used.

6. A driving assistance device (10) comprising
a controller (20) configured to execute processing including:
determining whether or not an autonomous travel control start condition for autonomous travel control, the autonomous travel control controlling steering, acceleration, and deceleration of a vehicle (1) in an automated manner, to be performable is established;
determining whether or not a destination to which the vehicle (1) is caused to travel is set;
notifying information prompting a start operation of the autonomous travel control in a first notification form, the start operation is a manual operation by a passenger for starting the autonomous travel control, when the start operation has not been performed yet and it is determined that the autonomous travel control start condition is established and it is determined that the destination is not set;
notifying information prompting a start operation of the autonomous travel control in a second notification form more intense than the first notification form when the start operation has not been performed yet and it is determined that the autonomous travel control start condition is established and it is determined that the destination is set;
determining whether or not the start operation is received; and
starting the autonomous travel control when determining that the start operation is received.

## Patentansprüche

1. Fahrassistenzverfahren, umfassend:
Bestimmen (S1), ob eine Autonome-Fahrsteuerungs-Startbedingung, dass autonome Fahrsteuerung durchgeführt werden kann, erfüllt ist oder nicht, wobei die autonome Fahrsteuerung Lenkung, Beschleunigung, und Verzögerung eines Fahrzeugs (1) auf eine automatisierte Weise steuert;
Bestimmen (S2), ob ein Ziel, zu dem das Fahrzeug (1) gefahren werden soll, festgelegt ist oder nicht;
Bekanntgeben (S5) von Informationen, die einen Startvorgang der autonomen Fahrsteuerung in einer ersten Benachrichtigungsform auffordern, wobei der Startvorgang ein manueller Vorgang durch einen Passagier zum Starten der autonomen Fahrsteuerung ist, wenn der Startvorgang noch nicht durchgeführt wurde und festgestellt wurde, dass die Autonome-Fahrsteuerungs-Startbedingung erfüllt ist und festgestellt wurde, dass das Ziel nicht festgelegt ist;
Bekanntgeben (S4) von Informationen, die einen Startvorgang der autonomen Fahrsteuerung in einer zweiten Benachrichtigungsform auffordern, die intensiver ist als die erste Benachrichtigungsform, wenn der Startvorgang noch nicht durchgeführt wurde und festgestellt wurde, dass die Autonome-Fahrsteuerungs-Startbedingung erfüllt ist und festgestellt wurde, dass das Ziel festgelegt ist;
Bestimmen (S6), ob der Startvorgang empfangen wurde oder nicht; und
Starten (S7) der autonomen Fahrsteuerung, wenn festgestellt wird, dass der Startvorgang empfangen wurde.

2. Fahrassistenzverfahren nach Anspruch 1, wobei
wenn festgestellt wird, dass die Autonome-Fahrsteuerungs-Startbedingung erfüllt ist und festgestellt wird, dass das Ziel festgelegt ist, das Fahrassistenzverfahren Sprachinformationen ausgibt (S4), die zu einem Startvorgang der autonomen Fahrsteuerung auffordern, und
wenn festgestellt wird, dass die Autonome-Fahrsteuerungs-Startbedingung erfüllt ist und festgestellt wird, dass das Ziel nicht festgelegt ist, das Fahrassistenzverfahren keine Sprachinformationen ausgibt, die zum Startvorgang auffordern.

3. Fahrassistenzverfahren nach Anspruch 1 oder 2, wobei, wenn festgestellt wird, dass die Autonome-Fahrsteuerungs-Startbedingung erfüllt ist und festgestellt wird, dass das Ziel nicht festgelegt ist, das Fahrassistenzverfahren Informationen, die zum Startvorgang auffordern, auf einer Anzeigevorrichtung anzeigt (S5).

4. Fahrassistenzverfahren nach einem der Ansprüche 1 bis 3, wobei, wenn festgestellt wird, dass die Autonome-Fahrsteuerungs-Startbedingung erfüllt ist und festgestellt wird, dass das Ziel festgelegt ist, das Fahrassistenzverfahren Informationen, die zum Startvorgang der autonomen Fahrsteuerung auffordern, auf einer Anzeigevorrichtung anzeigt (S5) sowie Sprachinformationen ausgibt (S4), die zum Startvorgang auffordern.

5. Fahrassistenzverfahren nach Anspruch 4, wobei
die autonome Fahrsteuerung eine Fahrassistenzsteuerung umfasst, um einen Spurwechsel auf eine automatisierte Weise durchzuführen, um das Fahrzeug (1) zu veranlassen, entlang einer Route von einer aktuellen Position zu einem Ziel zu fahren, und
die Sprachinformationen Informationen sind, die darüber informieren, dass die Fahrassistenzsteuerung verwendet werden kann.

6. Fahrassistenzvorrichtung (10), umfassend
eine Steuereinheit (20), die eingerichtet ist, Verarbeitung auszuführen, die umfasst:
Bestimmen, ob ein Ziel, zu dem das Fahrzeug (1) gefahren werden soll, festgelegt ist oder nicht;
Bekanntgeben von Informationen, die einen Startvorgang der autonomen Fahrsteuerung in einer ersten Benachrichtigungsform auffordern, wobei der Startvorgang ein manueller Vorgang durch einen Passagier zum Starten der autonomen Fahrsteuerung ist, wenn der Startvorgang noch nicht durchgeführt wurde und festgestellt wurde, dass die Autonome-Fahrsteuerungs-Startbedingung erfüllt ist und festgestellt wurde, dass das Ziel nicht festgelegt ist;
Bekanntgeben von Informationen, die einen Startvorgang der autonomen Fahrsteuerung in einer zweiten Benachrichtigungsform auffordern, die intensiver ist als die erste Benachrichtigungsform, wenn der Startvorgang noch nicht durchgeführt wurde und festgestellt wurde, dass die Autonome-Fahrsteuerungs-Startbedingung erfüllt ist und festgestellt wurde, dass das Ziel festgelegt ist;
Bestimmen, ob der Startvorgang empfangen wurde oder nicht; und
Starten der autonomen Fahrsteuerung, wenn festgestellt wird, dass der Startvorgang empfangen wurde.

## Revendications

1. Procédé d'assistance à la conduite, comprenant :
la détermination (S1) du fait qu'une condition de démarrage de contrôle de déplacement autonome pour un contrôle de déplacement autonome à activer est établie ou non, le contrôle de déplacement autonome contrôlant la direction, l'accélération et la décélération d'un véhicule (1) de manière automatisée ;
la détermination (S2) du fait qu'une destination vers laquelle le véhicule (1) est amené à se déplacer est définie ou non ;
la notification (S5) d'information invitant à une opération de démarrage du contrôle de déplacement autonome dans une première forme de notification, l'opération de démarrage étant une opération manuelle par un passager pour démarrer le contrôle de déplacement autonome, quand l'opération de démarrage n'a pas encore été effectuée, qu'il est déterminé que la condition de démarrage du contrôle de déplacement autonome est établie et qu'il est déterminé que la destination n'est pas définie ;
la notification (S4) d'information invitant à une opération de démarrage du contrôle de déplacement autonome dans une deuxième forme de notification plus intense que la première forme de notification quand l'opération de démarrage n'a pas encore été effectuée, qu'il est déterminé que la condition de démarrage du contrôle de déplacement autonome est établie et qu'il est déterminé que la destination est définie ;
la détermination (S6) du fait que l'opération de démarrage est reçue ou non ; et
le démarrage (S7) du contrôle de déplacement autonome quand il est déterminé que l'opération de démarrage est reçue.

2. Procédé d'assistance à la conduite selon la revendication 1, dans lequel
quand il est déterminé que la condition de démarrage du contrôle de déplacement autonome est établie et que la destination est définie, le procédé d'assistance à la conduite envoie (S4) de l'information vocale invitant à une opération de démarrage du contrôle de déplacement autonome, et
quand il est déterminé que la condition de démarrage du contrôle de déplacement autonome est établie et que la destination n'est pas définie, le procédé d'assistance à la conduite n'envoie pas d'information vocale invitant à l'opération de démarrage.

3. Procédé d'assistance à la conduite selon la revendication 1 ou 2 dans lequel, quand il est déterminé que la condition de démarrage du contrôle de déplacement autonome est établie et que la destination n'est pas définie, le procédé d'assistance à la conduite affiche (S5) de l'information invitant à l'opération de démarrage sur un dispositif d'affichage.

4. Procédé d'assistance à la conduite selon l'une quelconque des revendications 1 à 3 dans lequel, quand il est déterminé que la condition de démarrage du contrôle de déplacement autonome est établie et que la destination est définie, le procédé d'assistance à la conduite affiche (S5) de l'information invitant à une opération de démarrage du contrôle de déplacement autonome sur un dispositif d'affichage, ainsi que l'envoi (S4) d'information vocale invitant à l'opération de démarrage.

5. Procédé d'assistance à la conduite selon la revendication 4, dans lequel
le contrôle de déplacement autonome inclut un contrôle d'assistance au déplacement pour effectuer de manière automatisée un changement de voie pour amener le véhicule (1) à se déplacer le long d'un itinéraire d'une position actuelle à une destination, et
l'information vocale est une information informant que le contrôle d'assistance au déplacement peut être utilisé.

6. Dispositif d'assistance à la conduite (10) comprenant un contrôleur (20) configuré pour exécuter un traitement incluant :
la détermination du fait qu'une condition de démarrage de contrôle de déplacement autonome pour un contrôle de déplacement autonome à activer est établie ou non, le contrôle de déplacement autonome contrôlant la direction, l'accélération et la décélération d'un véhicule (1) de manière automatisée ;
la détermination du fait qu'une destination vers laquelle le véhicule (1) est amené à se déplacer est définie ou non ;
la notification d'information invitant à une opération de démarrage du contrôle de déplacement autonome dans une première forme de notification, l'opération de démarrage étant une opération manuelle par un passager pour démarrer le contrôle de déplacement autonome, quand l'opération de démarrage n'a pas encore été effectuée, qu'il est déterminé que la condition de démarrage du contrôle de déplacement autonome est établie et qu'il est déterminé que la destination n'est pas définie ;
la notification d'information invitant à une opération de démarrage du contrôle de déplacement autonome dans une deuxième forme de notification plus intense que la première forme de notification quand l'opération de démarrage n'a pas encore été effectuée, qu'il est déterminé que la condition de démarrage du contrôle de déplacement autonome est établie et qu'il est déterminé que la destination est définie ;
la détermination du fait que l'opération de démarrage est reçue ou non ; et
le démarrage du contrôle de déplacement autonome lors de la détermination que l'opération de démarrage est reçue.
